# EUROPEAN PATENT SPECIFICATION

(11) **EP 1 088 843 B1**
(45) Date of publication and mention of the grant of the patent: **19.01.2005**
(21) Application number: 00120271.2
(22) Date of filing: 27.09.2000
(51) Int. Cl.: C08G 63/52, C08G 63/12, G03G 9/087

(54) **Nonlinear crystalline polyester**
Nichtlinearer kristalliner Polyester
Polyester cristallin non-linéaire

(30) Priority: 28.09.1999 JP 27501699
(43) Date of publication of application: 04.04.2001
(73) Proprietor: KAO CORPORATION, Chuo-ku Tokyo (JP)
(72) Inventor: Aoki, Katsutoshi, Kao Corporation, Wakayama-shi, Wakayama-ken (JP); Yamaguchi, Takashi, Kao Corporation, Wakayama-shi, Wakayama-ken (JP)
(74) Representative: VOSSIUS & PARTNER

(56) References cited:
- EP-A- 0 291 059
- EP-A- 0 495 476
- EP-A- 1 102 127
- EP-A- 1 107 069
- EP-A- 1 126 324
- EP-A- 1 126 325
- EP-A- 1 186 622
- WO-A-01/63366
- WO-A-96/15173
- DE-A- 10 042 927
- FR-A- 2 197 920
- GB-A- 1 373 220
- US-A- 4 481 351
- US-A- 4 975 513
- DATABASE WPI Section Ch, Week 199223 Derwent Publications Ltd., London, GB; Class A23, AN 1992-187901 XP002175346 & JP 04 120555 A (MITSUBISHI RAYON CO LTD) , 21 April 1992 (1992-04-21)
- DATABASE WPI Section Ch, Week 199615 Derwent Publications Ltd., London, GB; Class A23, AN 1996-148002 XP002175347 & JP 08 036274 A (MITSUBISHI RAYON CO LTD) , 6 February 1996 (1996-02-06)
- DATABASE WPI Section Ch, Week 197725 Derwent Publications Ltd., London, GB; Class A12, AN 1977-44369Y XP002175348 & JP 52 057282 A (TOYO SPINNING CO LTD), 11 May 1977 (1977-05-11)
- DATABASE WPI Section Ch, Week 198139 Derwent Publications Ltd., London, GB; Class A23, AN 1981-70483D XP002175349 & JP 56 099044 A (MITSUI TOATSU CHEM INC), 10 August 1981 (1981-08-10)

## Description

The present invention relates to a nonlinear crystalline polyester which is used as a resin binder for a toner used for developing electrostatic latent images formed in e.g. electrophotography, electrostatic recording method and electrostatic printing, and a base material for mold materials used in e.g. core materials for automobile interior materials, silencers for air conditioners, fiber-reinforced plastics and soundproofing plates for construction materials.

It is known that a crystalline resin is suitably used as a resin binder for toner (JP-B- Sho 62-39428 and JP-A- Sho 62-276565 and Hei 9-329917). However, presently known crystalline resins are each found to be a linear polymer from its raw material monomers, so that there has not yet been reported a polyester which is nonlinear and crystalline.

JP-A-04 120 555 discloses a polyester resin for crystalline crosslinked type toner. Namely, the resin contains a unit derived from terephthalic acid and/or lower alkyl ester thereof and a unit derived from C₂₋₄ straight chain alkylene glycol and a unit derived from a trivalent or higher carboxylic acid and/or polyhydric alcohol and the total amount of these units is ≥60mol% of the total monomer amount.

JP-A-08 036 274 relates to a polyester resin for toner. The polyester resin consists of acid components based on terephthalic acid, diol components based on C₂₋₈ straight chain alkylene glycol and polycarboxylic acid other than dicarboxylic acid and/or polyol other than diol.

JP-A-52 057 282 is directed to an unsaturated polyester resin, which is said to be solid at normal temperatures, and which is said to be capable of giving fiber-reinforced molded products.

US-A-4,975,513 describes a crystalline polyester resin derived from the reaction between a prepolymer and trimellitic anhydride in an amount of less than 10 wt% of the prepolymer, wherein the prepolymer as an intermediate product is formed from the reaction between an alcohol mixture containing at least 40 mole% ethylene glycol and at least 30 mol% neopentyl glycol, and an acid mixture containing terephthalic acid or dimethyl terephthalate of at least 40 mole% and a linear dicarboxylic acid, or between an alcohol mixture containing 100 wt% terephthalic acid or dimethyl terephthalate.

Furthermore, FR-A-2 197 920 concerns a process for the preparation of thermoplastic copolyester molding compositions.

JP-A-56 099 044 relates to a resinous composition for binding molding sand grains, which comprises a dicarboxylic acid component comprising 10-50 mol% of one of terephthalic acid, isophthalic acid, and their alkyl esters, and 90-50mol% of fumaric acid; and an alcohol component comprising 1-40mol% of a trivalent or higher polyol and more than 50mol% of one of ethyleneglycol, trimethyleneglycol, neopentylglycol, hydrogenated bisphenol A and 2,2-di(4-hydroxypropoxyphenyl) propane.

US-A-4,481,351 discloses branched polyester waxes, which contain particular amounts of tri- or tetrafunctional hydroxyl containing compounds. The branched polyester waxes may be semicrystalline or crystalline-solids with melting points less than about 200°C.

GB-A-1 373 220 describes a non-linear polyester resin derived from a dicarboxylic acid and a polyol blend, wherein said polyol blend comprises at least 98 mol% of a defined etherifed diphenol; and from 0.01 to 2.0 mol% of an alkoxylated polyhydroxy compound containing from 3 to 12 carbon atoms and from 3 to 9 hydroxyl groups, and wherein the alkoxylated polyhydroxy compound contains from 1 to 10 mols of oxyalkylene groups per hydroxyl group and said oxyalkylene radical is oxyethylene or oxypropylene; the number of carboxyl groups of said dicarboxylic acid to the number of hydroxyl groups of said polyol blend being in a ratio of from 1.2:1 to 0.8:1.

WO-A-96/15173 relates to special biodegradable polyesters obtainable by reaction of a mixture consisting essentially of (a1) a mixture consisting essentially of from 35 to 95 mol% of adipic acid or ester-forming derivatives thereof or mixtures thereof, from 5 to 65 mol% of terephthalic acid or ester-forming derivatives thereof or mixtures thereof, and from 0 to 5 mol% of a sulfonate compound, the sum of the individual mole percentages being 100 mol%, and (a2) a dihydroxy compound selected from the group consisting of C₂-C₆-alkanediols and C₅-C₁₀-cycloalkanediols, the molar ratio of (a1) to (a2) being chosen within the range from 0.4:1 to 1.5:1.

An object of the present invention is to provide a nonlinear crystalline polyester having excellent fixing ability and appropriate strength when used as a resin binder for a toner for electrophotography, and a base material for mold materials.

The present invention relates to a nonlinear crystalline polyester obtainable by polycondensing monomers containing trivalent or higher polyvalent monomers selected from trihydric or higher polyhydric alcohols and tricarboxylic or higher polycarboxylic acid compounds in an amount of from 0.1 to 20 mol% of all monomers used for polycondensation, wherein 1,4-butane diol is contained as a monomer in an amount of 80 mol% or more of an alcohol component, and fumaric acid is contained as a monomer in an amount of 80 mol% or more of a carboxylic acid component.

The nonlinear crystalline polyester of the present invention is prepared by using monomers containing an alcohol component comprising a dihydric alcohol and/or a trihydric or higher polyhydric alcohol, and a carboxylic acid component comprising a dicarboxylic acid compound and/or a tricarboxylic or higher polycarboxylic acid compound.

The dihydric alcohol components include ethylene glycol, diethylene glycol, triethylene glycol, 1,2-propylene glycol, 1,3-propylene glycol, 1,4-butanediol, neopentyl glycol, 1,4-butenediol, 1,5-pentanediol, 1,6-hexanediol, 1,4-cyclohexanedimethanol, dipropylene glycol, polyethylene glycol, polypropylene glycol and polytetramethylene glycol, among which from the viewpoints of the softening point and the crystallinity of the resin, 1,4-butanediol, ethylene glycol, 1,2-propylene glycol, and 1,6-hexanediol are preferable, and 1,4-butanediol is more preferable. Especially, 1,4-butanediol constitutes 80 mol% or more, preferably from 90 to 100 mol%, of the alcohol component.

The trihydric or higher polyhydric alcohols include sorbitol, 1,2,3,6-hexanetetrol, 1,4-sorbitan, pentaerythritol, dipentaerythritol, tripentaerythritol, 1,2,4-butanetriol, 1,2,5-pentanetriol, glycerol, 2-methylpropanetriol, 2-methyl-1,2,4-butanetriol, trimethylolethane, trimethylolpropane and 1,3,5-trihydroxymethylbenzene, among which glycerol is preferable from the viewpoints of the softening point and the crystallinity of the resin.

In addition, examples of the dicarboxylic acid compounds include maleic acid, fumaric acid, citraconic acid, itaconic acid, glutaconic acid, phthalic acid, isophthalic acid, terephthalic acid, cyclohexanedicarboxylic acid, succinic acid, adipic acid, sebacic acid, azelaic acid, and malonic acid; succinic acids substituted by an alkyl group having 1 to 20 carbon atoms or an alkenyl group having 2 to 20 carbon atoms, such as dodecenylsuccinic acid and octylsuccinic acid; acid anhydrides thereof and alkyl (1 to 3 carbon atoms) esters thereof, among which from the viewpoints of the softening point and the crystallinity of the resin, fumaric acid, succinic acid and adipic acid are preferable, and fumaric acid is more preferable. Especially, fumaric acid constitutes 80 mol% or more, preferably from 85 to 100 mol%, of the carboxylic acid component.

Examples of the tricarboxylic or higher polycarboxylic acid compound include 1,2,4-benzenetricarboxylic acid (trimellitic acid), 2,5,7-naphthalenetricarboxylic acid, 1,2,4-naphthalenetricarboxylic acid, 1,2,4-butanetricarboxylic acid, 1,2,5-hexanetricarboxylic acid, 1,3-dicarboxy-2-methyl-2-methylenecarboxypropane, 1,2,4-cyclohexanetricarboxylic acid, tetra(methylenecarboxyl)methane, 1,2,7,8-octanetetracarboxylic acid, pyromellitic acid, Empol trimer acid, acid anhydrides thereof and alkyl (1 to 3 carbon atoms) esters thereof, among which from the viewpoints of the softening point and the crystallinity of the resin, trimellitic acid and derivatives thereof are preferable, and trimellitic acid anhydride is more preferable..

In the present invention, in order to form a nonlinear polyester, monomers contain trivalent or higher polyvalent monomers selected from trihydric or higher polyhydric alcohols and tricarboxylic or higher polycarboxylic acid compounds in an amount of from 0.1 to 20 mol%, preferably from 0.5 to 15 mol%, more preferably from 1 to 13 mol%, of all monomers used for polycondensation.

The polycondensation of the alcohol component with the carboxylic acid component can be carried out, for instance, by the reaction at a temperature of from 150° to 250°C in an inert gas atmosphere, using an esterification catalyst and a polymerization inhibitor as occasion demands. Concretely, in order to enhance the strength of the resin, the entire monomers may be charged at once. Alternatively, in order to reduce the low-molecular weight components, divalent monomers are firstly reacted, and thereafter trivalent or higher polyvalent monomers are added and reacted.

One of the features of the polyester obtainable by the polycondensation of the above monomers resides in that the polyester is nonlinear and crystalline. In other words, the polyester of the present invention is nonlinear, thereby exhibiting excellent strength, and is crystalline, thereby exhibiting excellent fixing ability when the polyester is used as a resin binder for toners or a base material for mold materials. Therefore, the polyester of the present invention can be suitably used e.g. for toners for electrophotography, and molding materials.

In the present invention, the term "nonlinear" may take any non-linear structure, including branched structures and cross-linked structures. Also, the term "crystalline" means that a Tₐ/T_{b} ratio, each as defined as follows, is from 0.9 to 1.1, preferably from 0.98 to 1.05. Here, in the present invention, Tₐ refers to a temperature corresponding to 1/2 of the height (h) of the S-shaped curve showing the relationship between the downward movement of a plunger (flow length) and temperature, namely, a temperature at which a half of the resin flows out, when measured by using a flow tester of the "koka" type ("CFT-500D," manufactured by Shimadzu Corporation) in which a 1 g sample is extruded through a nozzle having a dice pore size of 1 mm and a length of 1 mm, while heating the sample so as to raise the temperature at a rate of 6°C/min and applying a load of 1.96 MPa thereto with the plunger, which is also called a softening point. Also, T_{b} refers to the temperature of an intersection of the extension of the baseline of not more than the maximum endothermic peak temperature and the tangential line showing the maximum inclination between the kickoff of the peak and the top of curves as determined with a sample using a differential scanning calorimeter ("DSC Model 210," manufactured by Seiko Instruments, Inc.), when the sample is treated by raising its temperature to 200°C, cooling the hot sample at a cooling rate of 10°C/min. to 0°C, and thereafter heating the sample so as to raise the temperature at a rate of 10°C/min.

In consideration of its use as e.g. a resin binder for toners, the polyester of the present invention has Tₐ, namely the softening point, of preferably from 85° to 140°C, more preferably from 100° to 140°C, and T_{b} of preferably from 77° to 150°C, more preferably from 90° to 140°C.

In consideration of its use as e.g. a resin binder for toners, the nonlinear crystalline polyester has a number-average molecular weight of tetrahydrofuran-soluble component of preferably from 500 to 3000.

### EXAMPLES

### [Tₐ]

Tₐ refers to a temperature corresponding to 1/2 of the height (h) of the S-shaped curve showing the relationship between the downward movement of a plunger (flow length) and temperature, namely, a temperature at which a half of the resin flows out, when measured by using a flow tester of the "koka" type ("CFT-500D," manufactured by Shimadzu Corporation) in which a 1 g sample is extruded through a nozzle having a dice pore size of 1 mm and a length of 1 mm, while heating the sample so as to raise the temperature at a rate of 6°C/min and applying a load of 1.96 MPa thereto with the plunger.

### [T_{b}]

T_{b} refers to the temperature of an intersection of the extension of the baseline of not more than the maximum endothermic peak temperature and the tangential line showing the maximum inclination between the kickoff of the peak and the top of curves as determined with a sample using a differential scanning calorimeter ("DSC Model 210," manufactured by Seiko Instruments, Inc.), when the sample is treated by raising its temperature to 200°C, cooling the hot sample at a cooling rate of 10°C/min. to 0°C, and thereafter heating the sample so as to raise the temperature at a rate of 10°C/min.

### [Number-Average Molecular Weight of Tetrahydrofuran-Soluble Component]

The number-average molecular weight is determined by using gel permeation chromatography (sample concentration: 0.5% by weight; eluent: tetrahydrofuran; flow rate: 1 ml/min.; temperature: 40°C; column: GMHLX/G3000HXL (manufactured by Tosoh Corporation); standard sample: monodisperse polystyrene). Here, as a sample one which is prepared by placing 40 mg of resin powder and 10 ml of tetrahydrofuran in a 20-ml sample tube, stirring the mixture with a ball-mill at room temperature for 3 hours, and thereafter filtering the resulting mixture with a membrane filter (manufactured by Toyo Roshi K.K., 0.2 µm pore diameter) is used.

### Examples 1 to 8

A 5-liter four-necked flask equipped with a nitrogen inlet tube, a dehydration tube, a stirrer, and a thermocouple was charged with raw materials shown in Table 1, and the ingredients were reacted at 160°C for 5 hours. Thereafter, the temperature was raised to 200°C and reacted for 1 hour, and further reacted at 8.3 kPa for 1 hour, to give a nonlinear crystalline polyester. Tₐ, T_{b}, and the number-average molecular weight of tetrahydrofuran-soluble component of each of the resulting nonlinear crystalline polyesters are shown in Table 1.

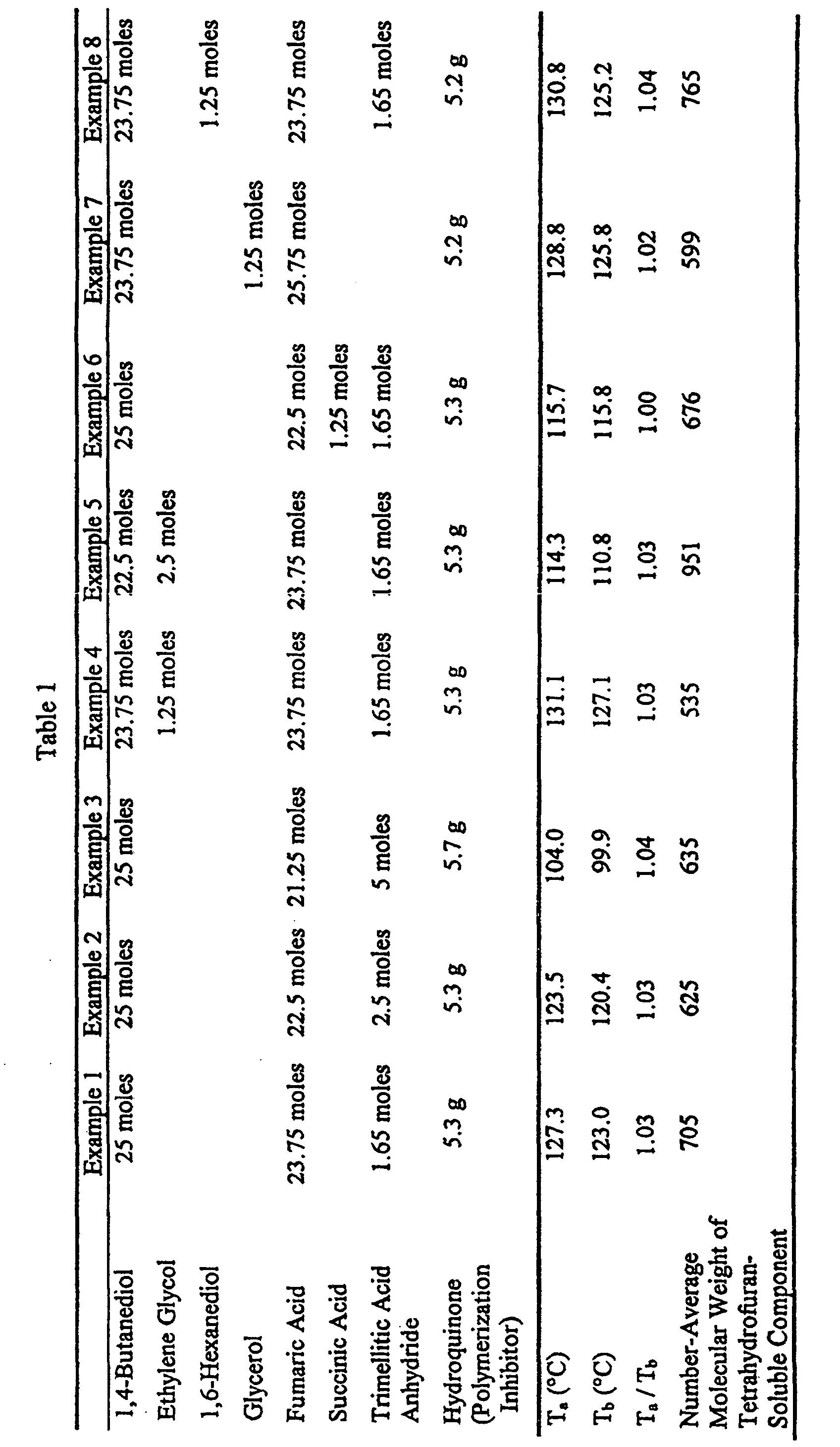

### Test Example 1

There were mixed together 100 parts by weight of each of the polyesters obtained in Examples 1 to 8 as the resin binder, 4 parts by weight of a colorant "MONARCH 880" (manufactured by Cabot Corporation), and 1.5 parts by weight of a charge control agent "T-77" (manufactured by Hodogaya Chemical Co., Ltd.) with a Henschel mixer. Thereafter, the mixture was melt-kneaded with a twin-screw extruder, pulverized and classified, to give a powder having a weight-average particle size of 11 µm. To 100 parts by weight of the resulting powder was added 0.5 parts by weight of a hydrophobic silica "R-972" (manufactured by Nippon Aerosil), and mixed with a Henschel mixer, to give a toner.

The resulting toner was loaded on a modified apparatus of a commercially available copy machine "AR-S330" (manufactured by Sharp Corporation) to develop images. As a result, excellent fixed images could be obtained.

According to the present invention, there can be provided a nonlinear crystalline polyester having excellent fixing ability and appropriate strength when used as a resin binder used for toners for electrophotography, and a base material for mold materials.

## Claims (Claims for the following Contracting State(s): DE)

1. A nonlinear crystalline polyester obtainable by polycondensing monomers containing trivalent or higher polyvalent monomers selected from
trihydric or higher polyhydric alcohols and tricarboxylic or higher polycarboxylic acid compounds in an amount of from 0.1 to 20 mol% of all monomers used for polycondensation,
wherein 1,4-butane diol is contained as a monomer in an amount of 80 mol% or more of an alcohol component, and fumaric acid is contained as a monomer in an amount of 80 mol% or more of a carboxylic acid component, wherein the polyester obtainable by reacting a mixture of 74 parts by weight of ethylene glycol, 1233 parts by weight of 1,4-butane diol, 1659 parts by weight of fumaric acid, 146 parts by weight of trimellitic acid and 1.5 parts by weight dibutyl tin oxide at 160°C for 4 hours in a nitrogen atmosphere, raising the temperature to 200°C, and continuing the reaction under atmospheric pressure for 1 hour and under a reduced pressure of 9,33 kPa for a further hour is excluded.

2. The nonlinear crystalline polyester according to claim 1, wherein said trivalent or higher polyvalent monomer is selected from at least one of trimellitic anhydride and glycerol.

3. The nonlinear crystalline polyester according to claim 1, wherein the nonlinear crystalline polyester has a softening point of from 85° to 140°C, and the number-average molecular weight of a tetrahydrofuran-soluble component is from 500 to 3000.

## Claims (Claims for the following Contracting State(s): FR, GB)

1. A nonlinear crystalline polyester obtainable by polycondensing monomers containing trivalent or higher polyvalent monomers selected from
trihydric or higher polyhydric alcohols and tricarboxylic or higher polycarboxylic acid compounds in an amount of from 0.1 to 20 mol% of all monomers used for polycondensation,
wherein 1,4-butane diol is contained as a monomer in an amount of 80 mol% or more of an alcohol component, and fumaric acid is contained as a monomer in an amount of 80 mol% or more of a carboxylic acid component

2. The nonlinear crystalline polyester according to claim 1, wherein said trivalent or higher polyvalent monomer is selected from at least one of trimellitic anhydride and glycerol.

3. The nonlinear crystalline polyester according to claim 1, wherein the nonlinear crystalline polyester has a softening point of from 85° to 140°C, and the number-average molecular weight of a tetrahydrofuran-soluble component is from 500 to 3000.

## Patentansprüche (Patentansprüche für folgende(n) Vertragsstaat(en): DE)

1. Nichtlinearer kristalliner Polyester, erhältlich durch Polykondensieren von Monomeren, die dreiwertige oder höher mehrwertige Monomere, ausgewählt aus dreiwertigen oder höher mehrwertigen Alkoholen und Tricarbon- oder höheren Polycarbonsäureverbindungen, in einer Menge von 0,1 bis 20 Mol-% aller für die Polykondensation verwendeten Monomere enthalten, wobei 1,4-Butandiol als ein Monomer in einer Menge von 80 Mol-% oder mehr des Alkoholbestandteils und Fumarsäure als ein Monomer in einer Menge von 80 Mol-% oder mehr des Carbonsäurebestandteils enthalten ist, wobei der Polyester, erhältlich durch Umsetzen eines Gemischs aus 74 Gewichtsteilen Ethylenglycol, 1233 Gewichtsteilen 1,4-Butandiol, 1659 Gewichtsteilen Fumarsäure, 146 Gewichtsteilen Trimellithsäure und 1,5 Gewichtsteilen Dibutylzinnoxid bei 160°C für 4 Stunden in einer Stickstoffatmosphäre, Erhöhen der Temperatur auf 200°C und Fortsetzen der Umsetzung unter atmosphärischem Druck für 1 Stunde und unter vermindertem Druck von 9,33 kPa für eine weitere Stunde, ausgeschlossen ist.

2. Nichtlinearer kristalliner Polyester gemäß Anspruch 1, wobei das dreiwertige oder höher mehrwertige Monomer aus mindestens einem von Trimellithsäureanhydrid und Glycerin ausgewählt ist.

3. Nichtlinearer kristalliner Polyester gemäß Anspruch 1, wobei der nichtlineare kristalline Polyester einen Erweichungspunkt von 85°C bis 140°C aufweist und das Zahlenmittel des Molekulargewichts eines in Tetrahydrofuran löslichen Bestandteils 500 bis 3000 beträgt.

## Patentansprüche (Patentansprüche für folgende(n) Vertragsstaat(en): FR, GB)

1. Nichtlinearer kristalliner Polyester, erhältlich durch Polykondensieren von Monomeren, die dreiwertige oder höher mehrwertige Monomere, ausgewählt aus dreiwertigen oder höher mehrwertigen Alkoholen und Tricarbon- oder höheren Polycarbonsäureverbindungen, in einer Menge von 0,1 bis 20 Mol-% aller für die Polykondensation verwendeten Monomere enthalten, wobei 1,4-Butandiol als ein Monomer in einer Menge von 80 Mol-% oder mehr des Alkoholbestandteils und Fumarsäure als ein Monomer in einer Menge von 80 Mol-% oder mehr des Carbonsäurebestandteils enthalten ist.

2. Nichtlinearer kristalliner Polyester gemäß Anspruch 1, wobei das dreiwertige oder höher mehrwertige Monomer aus mindestens einem von Trimellithsäureanhydrid und Glycerin ausgewählt ist.

3. Nichtlinearer kristalliner Polyester gemäß Anspruch 1, wobei der nichtlineare kristalline Polyester einen Erweichungspunkt von 85°C bis 140°C aufweist und das Zahlenmittel des Molekulargewichts eines in Tetrahydrofuran löslichen Bestandteils 500 bis 3000 beträgt.

## Revendications (Revendications pour l'(les) Etat(s) contractant(s) suivant(s): DE)

1. Polyester cristallin non linéaire, susceptible d'être obtenu par polycondensation de monomères contenant des monomères trivalents ou à polyvalence supérieure choisis parmi :
des composés d'alcools trihydriques ou polyhydriques supérieurs et d'acide tricarboxylique ou polycarboxylique supérieur en une quantité de 0,1 à 20 mol % de tous les monomères utilisés pour la polycondensation,
dans lequel le 1,4-butane diol est contenu comme monomère en une quantité de 80 mol % ou plus d'un composant alcoolisé, et l'acide fumarique est contenu comme monomère en une quantité de 80 mol % ou plus d'un composant d'acide carboxylique, dans lequel le polyester susceptible d'être obtenu en mettant à réagir un mélange de 74 parties en poids d'éthylène glycol, 1233 parties en poids de 1,4-butane diol, 1659 parties en poids d'acide fumarique, 146 parties en poids d'acide trimellitique et 1,5 parties en poids d'oxyde de dibutylétain à 160°C pendant 4 heures dans une atmosphère d'azote, en augmentant la température à 200°C et en poursuivant la réaction sous pression atmosphérique pendant 1 heure et sous une pression réduite de 9,33 kPa pendant une heure supplémentaire, est exclu.

2. Polyester cristallin non linéaire selon la revendication 1, dans lequel ledit monomère trivalent ou à polyvalence supérieure est choisi parmi au moins un de l'anhydride trimellitique et du glycérol.

3. Polyester cristallin non linéaire selon la revendication 1, dans lequel le polyester cristallin non linéaire a un point de ramollissement de 85°C à 140°C, et la masse moléculaire moyenne en nombre d'un composant soluble dans du tétrahydrofurane est de 500 à 3000.

## Revendications (Revendications pour l'(les) Etat(s) contractant(s) suivant(s): FR, GB)

1. Polyester cristallin non linéaire, susceptible d'être obtenu par polycondensation de monomères contenant des monomères trivalents ou à polyvalence supérieure choisis parmi :
des composés d'alcools trihydriques ou polyhydriques supérieurs et d'acide tricarboxylique ou polycarboxylique supérieur en une quantité de 0,1 à 20 mol % de tous les monomères utilisés pour la polycondensation,
dans lequel le 1,4-butane diol est contenu comme monomère en une quantité de 80 mol % ou plus d'un composant alcoolisé, et l'acide fumarique est contenu comme monomère en une quantité de 80 mol % ou plus d'un composant d'acide carboxylique.

2. Polyester cristallin non linéaire selon la revendication 1, dans lequel ledit monomère trivalent ou à polyvalence supérieure est choisi parmi au moins un de l'anhydride trimellitique et du glycérol.

3. Polyester cristallin non linéaire selon la revendication 1, dans lequel le polyester cristallin non linéaire a un point de ramollissement de 85°C à 140°C, et la masser moléculaire moyenne en nombre d'un composant soluble dans du tétrahydrofurane est de 500 à 3000.
